Europäisches Patentamt

European Patent Office

Office européen des brevets

(19)

(11) EP 0 717 560 A1

(12) DEMANDE DE BREVET EUROPEEN

(43) Date de publication:
19.06.1996 Bulletin 1996/25

(51) Int Cl.6: H04N 5/217, H04N 5/33

(21) Numéro de dépôt: 95402792.6

(22) Date de dépôt: 12.12.1995

(84) Etats contractants désignés:
DE GB IT

(30) Priorité: 16.12.1994 FR 9415170

(71) Demandeur: THOMSON-CSF
75008 Paris (FR)

(72) Inventeurs:
• Soucail, Bernard
F-92402 Courbevoie Cedex (FR)

• Audier, Marcel Francis
F-92402 Courbevoie Cedex (FR)
• Ayoun, André
F-92402 Courbevoie Cedex (FR)

(74) Mandataire: Lincot, Georges et al
THOMSON-CSF,
SCPI,
B.P. 329,
50, rue Jean-Pierre Timbaud
F-92402 Courbevoie Cédex (FR)

(54) **Procédé de compensation électronique des non-uniformités dans la détection d'image, en particulier infrarouge, et circuit de correction pour sa mise en oeuvre**

(57) Le procédé selon l'invention propose d'effectuer une correction de non-uniformités des capteurs d'un détecteur d'imagerie en temps réel, à partir d'une correction entre deux capteurs voisins ($C_i$, $C_{i+1}$), par détermination de la différence d'intensités des signaux ($S_i$, $S_{i+1}$) délivrés par ces capteurs, puis par ajustement de niveau des composantes continues de ces deux signaux en fonction d'une mesure de la différence d'intensité des signaux, et enfin par propagation de la correction de proche en proche d'un capteur à l'autre.

Un exemple de réalisation d'un circuit élémentaire de correction selon l'invention comporte un soustracteur ($\Delta_{i+1}$), pour soustraire les intensités des signaux ($S_i$, $S_{i+1}$) délivrés par les capteurs ($C_i$, $C_{i+1}$) après intégration et corrigés lors d'une correction antérieure, deux compteurs pour comptabiliser les différences d'intensités positives et négatives des signaux, un soustracteur ($\Delta_{i+1}$) de niveaux des compteurs ($\Sigma^+_{i+1}$, $\Sigma^-_{i+1}$) pour fournir une valeur de correction ($O_{i+1}$) du signal ($S_{i+1}$) à un amplificateur ($A_{i+1}$), par l'intermédiaire d'un adaptateur de gain ($G_{i+1}$, $K_{i+1}$).

Application aux caméras infrarouges à barrette détectrice.

FIG.2

**Description**

L'invention concerne le domaine de l'imagerie, et plus particulièrement celui de la détection infrarouge dans les bandes spectrales de transmission dans l'atmosphère habituellement utilisées, à savoir les bandes 3 à 5 µm ou 8 à 12 µm. L'invention s'applique notamment aux caméras infrarouges à barrette de détection, aux caméras "visibles" à barrette photosensible dans la bande spectrale du rayonnement visible, ou aux dispositifs de veille à barrette tournante.

Classiquement, les détecteurs utilisés dans les caméras infrarouges permettent d'acquérir une image, dite image optique, générée à partir d'un champ d'observation donné. Cette image est obtenue par projection à travers un système opto-mécanique du flux infrarouge utile provenant de la scène observée située dans le champ de vue. Le détecteur est habituellement constitué d'un nombre important (quelques dizaines à quelques milliers) de capteurs élémentaires disposés selon une ou plusieurs rangées, parallèlement à une direction principale, le détecteur se présentant alors sous une forme dite de barrette. Une barrette de détection possède une étendue sensiblement égale à la longueur ou à la hauteur de l'image projetée par le système optique de la caméra, selon le type de balayage utilisé, respectivement vertical ou horizontal.

Le nombre de capteurs élémentaires étant inférieur au nombre de points d'image (dits "pixels") nécessaires à la visualisation finale, un dispositif de balayage opto-mécanique est en effet associé à la barrette pour permettre une acquisition successive de tous les points d'image. La direction principale définie par la barrette est orthogonale à la direction de balayage, qui est classiquement horizontale ou verticale. Par exemple un format de barrette couramment utilisé comprend 288 capteurs élémentaires en parallèle, correspondant aux 288 lignes d'une trame d'image de télévision d'un standard connu. Le balayage permet alors d'analyser, pendant la durée d'exploration de cette trame (classiquement 20 ms) les 768 points de chaque ligne correspondant à ce standard. La longueur de la barrette peut également être égale à une fraction de la longueur ou de la hauteur de l'image. Dans ce cas, la barrette est associée à un système de balayage bidirectionnel.

Les capteurs infrarouges élémentaires sont fabriqués par microélectronique dans une plaque de matériau semi-conducteur de faible bande interdite, puis sont connectés à des circuits électroniques d'intégration et de multiplexage pour, respectivement, séquencer les signaux provenant des différents capteurs élémentaires et délivrer un signal de sortie vidéo à haute cadence. Du fait des variations de qualité du matériau de la plaque sur laquelle sont fabriqués les capteurs élémentaires, et des variations géométriques de ces capteurs (classiquement de forme sensiblement carrée) dus aux défauts de fabrication, les capteurs élémentaires présentent des courants d'obscurité et des réponses sensiblement différentes, en niveau et en gain, d'un capteur à l'autre. Ces variations rendent alors inexploitable le signal de sortie, tel que multiplexé à partir des signaux élémentaires fournis par ces capteurs.

Pour remédier à ce défaut, le signal de sortie est habituellement traité dans un processeur avant d'être transmis au moniteur de visualisation. Ce traitement nécessite également une première conversion de signal analogique/numérique et une seconde conversion numérique/analogique, respectivement en amont et en aval du processeur. Une harmonisation des capteurs en niveau et en gain est alors réalisée au moyen d'une transformation affine, par application de coefficients déterminés dans une phase préalable de calibration, éventuellement renouvelée en cours d'utilisation. Ce type de traitement est par exemple décrit dans le brevet EP-419 342.

Le problème lié à ce mode de traitement résulte de la grande dynamique nécessaire et du haut débit d'informations qui doivent être traitées. En effet, l'intensité du signal utile, qui résulte de la variation de flux lumineux en fonction de la température, est toujours faible devant l'intensité de la composante continue de ce signal, correspondant au flux lumineux infrarouge dit de fond de scène, captée globalement par le détecteur dans sa bande spectrale de sensibilité. Pour atteindre les performances souhaitées correspondant aux capacités des détecteurs infrarouges actuels, la dynamique de traitement requise doit être supérieure à 12 bits et la cadence de traitement égale à celle des standards de visualisation de télévision, soit environ 10 MHz. Ces données imposent donc un surdimensionnement des processeurs de traitement d'images.

L'invention vise précisément à pallier ces défauts en proposant un procédé de traitement électronique qui permet d'effectuer une correction de non-uniformité en temps réel, par mesure de la différence d'intensités des signaux de deux capteurs voisins, puis par un ajustement de niveau de composante continue entre ces deux capteurs en fonction de la différence d'intensités des signaux délivrés. L'opération est renouvelée de proche en proche pour tous les capteurs du détecteur.

Plus précisément, l'invention a pour objet un procédé de compensation électronique des non-uniformités des capteurs élémentaires d'une barrette de détection d'image, en particulier infrarouge, associée à un système optomécanique de balayage et à un groupe oculaire de projection d'une image de scène sur la barrette, chacun de ces capteurs délivrant un signal présentant une composante continue et une intensité fonction d'un éclairement reçu dans un champ élémentaire donné pendant une durée prédéterminée, caractérisé en ce qu'il consiste à effectuer, lors d'une intégration de signal par un premier capteur, une mesure de différence entre intensités des signaux, délivrés par le premier capteur et par un capteur voisin et corrigés lors d'une intégration de signal antérieure, à réaliser une correction de composante continue sur au moins le signal délivré par le premier capteur, en fonction d'une mesure de la différence d'intensité des signaux, et à renouveler l'ensemble des étapes précédentes pour tous les capteurs à corriger.

L'invention concerne aussi un circuit de correction permettant de mettre en oeuvre un tel procédé de compensation électronique. Pour réaliser ce circuit, l'invention exploite les possibilités offertes par la microélectronique silicium qui permet d'intégrer un grand nombre de composants électroniques dans le circuit de multiplexage d'une barrette de détection infrarouge.

L'invention permet de conduire à une simplification extrême des caméras infrarouges puisque le signal de sortie du détecteur, de dynamique adaptée à celle du standard de télévision, peut être directement utilisée pour la visualisation.

Selon un mode de réalisation, la mesure de la différence d'intensité des signaux utilisée pour la correction est effectuée par incrémentation de l'un ou de l'autre de deux compteurs suivant le signe de cette différence, puis par différence entre les niveaux des deux compteurs.

Selon un autre mode de réalisation, le procédé est simplifié et ne comporte plus de compteurs de différences de niveaux pour effectuer la mesure de la différence d'intensité des signaux.

D'autres caractéristiques et avantages apparaîtront à la lecture de la description qui suit, telle qu'illustrée par les figures annexées qui représentent respectivement :

- la figure 1, un schéma de caméra infrarouge intégrant un détecteur à circuit de correction des non-uniformités selon l'invention ;
- la figure 2, une vue partielle et schématique d'un circuit de compensation mettant en oeuvre le procédé selon l'invention ;
- la figure 3, une vue partielle et schématique d'une variante de circuit de compensation mettant en oeuvre le procédé selon l'invention.

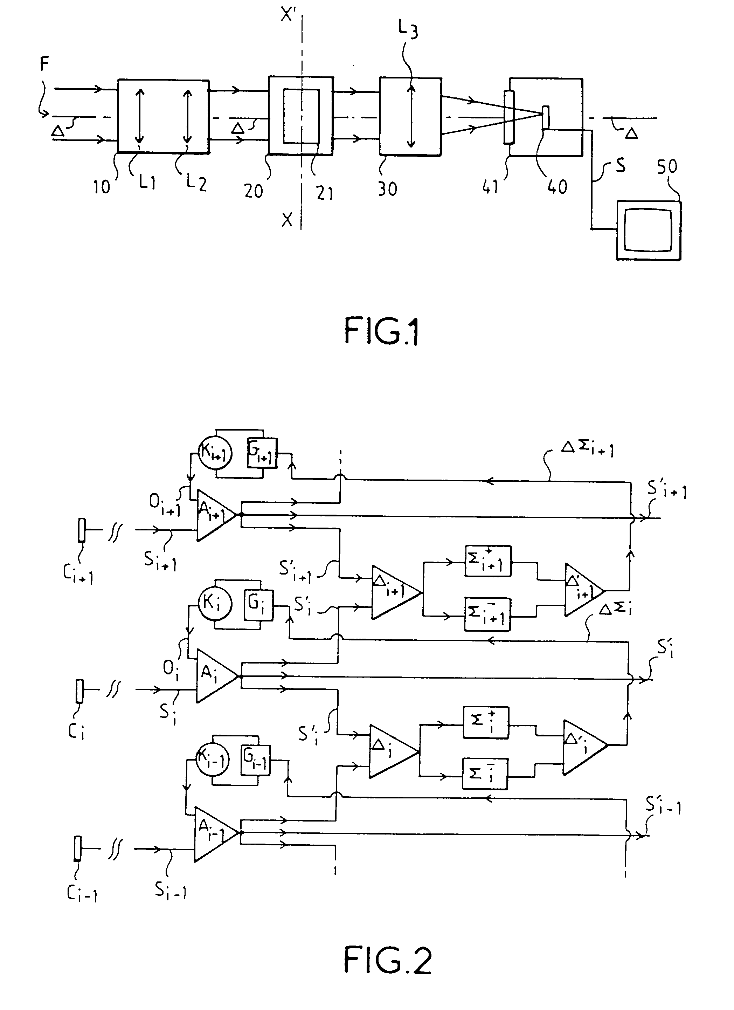

La figure 1 représente, selon une coupe dans un plan perpendiculaire à la direction de balayage, les principaux éléments d'une caméra infrarouge à balayage intégrant un détecteur infrarouge selon l'invention. Une telle caméra comporte classiquement un groupe optique afocal de tête 10, symbolisé sur la figure par deux lentilles $L_1$ et $L_2$ un système de balayage optomécanique 20, un groupe oculaire 30 symbolisé sur la figure par une lentille $L_3$, et un détecteur infrarouge 40 enfermé dans un cryostat 41 refroidi à la température désirée ( habituellement autour de 77K ) par tout moyen connu de l'homme de l'art. Le groupe afocal de tête 10 permet d'adapter la caméra à des conditions opérationnelles variables. Il capte un flux lumineux parallèle F dans une direction de visée définie par le système de balayage 20. Ce système de balayage intègre un miroir trame 21, pivotant autour d'un axe X'X, perpendiculaire à la direction de balayage $\Delta$, la rotation de ce miroir 21 permettant de défléchir la direction de visée selon la direction $\Delta$.

L'amplitude de cette déflexion définit l'ouverture du champ de vue qui est balayé périodiquement à la cadence de vibration du miroir trame 21. Après réflexion sur le miroir de balayage 21, le flux parallèle F est projeté par le groupe oculaire 30 sur la barrette de détection infrarouge 40, située dans son plan de focalisation, pour former une image de la scène observée dans le champ de vue. Le détecteur 40 fournit un signal de sortie vidéo S qui est transmis à un moniteur de visualisation 50.

L'invention permet de s'affranchir, en sortie du détecteur 40, d'un système de correction numérique du signal de sortie, habituellement disposé entre le détecteur et le moniteur de visualisation.

Dans l'exemple de réalisation, le détecteur 40 a un grand nombre de capteurs élémentaires disposés selon une seule rangée perpendiculaire à la direction de balayage $\Delta$. La barrette s'étend sensiblement selon la hauteur ou la longueur de l'image projetée, correspondant respectivement à une direction de balayage horizontale ou verticale. Cet exemple de barrette de détection à rangée unique est pratique pour faciliter l'exposé, mais l'invention s'applique à tous les types de barrette existants, en particulier aux barrettes à plusieurs rangées de capteurs alignées ou décalées. Ce type de barrette permet de cumuler dans un circuit adapté les charges des capteurs qui observent successivement une même portion d'espace au cours du balayage. La technologie classiquement utilisée pour gérer ce circuit de cumul des charges est connue sous l'appellation TDI (initiales de "Time Delay and Integration", c'est-à-dire intégration à temps différé en terminologie anglo-saxonne). Cette technologie permet d'augmenter le rapport signal/bruit, et donc le contraste de l'image finale visualisée.

Les capteurs élémentaires délivrent une quantité de charges proportionnelle à l'éclairement qu'ils reçoivent pendant une durée déterminée, en fonction de la vitesse de balayage du système optomécanique 20 et du matériau semi-conducteur dont ils sont constitués. On utilise par exemple le matériau composite HgCdTe (mercure-cadmium-tellure) dans les bandes spectrales 3 à 5 $\mu m$ et 8 à 12 $\mu m$, la composition de ce matériau étant ajustée pour satisfaire au besoin en réponse spectrale, ou un composé d'antimoine d'indium (InSb) dans la bande 3 à 5 $\mu m$.

Les charges délivrées par chacun des capteurs élémentaires sont classiquement intégrées dans des condensateurs de stockage formant un circuit d'intégration, puis lues sous forme de signaux de sortie élémentaires, à une cadence réglée par un registre de synchronisation, vers un circuit de multiplexage. Cette cadence, qui est réglée en fonction du standard de visualisation utilisé, définit une période d'intégration des charges dans les condensateurs de stockage.

Selon l'invention, les signaux de sortie des capteurs sont harmonisés, c'est-à-dire qu'ils donnent une même réponse en sortie pour une même quantité d'éclairement, quelle que soit cette quantité dans la limite des capacités des capteurs, grâce à un circuit électronique adapté selon le procédé de l'invention, et tel qu'illustré à titre d'exemple par la figure 2.

La figure 2 représente une vue partielle de ce circuit électronique de compensation, pour des capteurs voisins, par exemple $C_i$ et $C_{i+1}$, qui décrivent, au cours du balayage, des lignes différentes de l'image projetée par le groupe oculaire de la caméra. Le procédé consiste, dans une première étape, à effectuer, à chaque intégration du signal $S_{i+1}$ d'un premier capteur $C_{i+1}$, une mesure de différence entre les intensités des signaux $S'_{i+1}$ et $S'_i$, délivrés par le capteur $C_{i+1}$ et un capteur $C_i$ après une correction antérieure, à réaliser une correction de composante continue sur au moins ce signal $S'_{i+1}$ délivrée par le capteur $C_{i+1}$ en fonction d'une mesure de la différence entre les intensités de $S'_{i+1}$ et $S'_i$, et à renouveler les étapes précédentes de proche en proche pour chacun des capteurs à corriger.

Selon un premier mode de réalisation, la mesure de la différence entre les intensités de $S'_{i+1}$ et $S'_i$ consiste à comptabiliser séparément les différences soit positives soit négatives entre les intensités des signaux de sortie $S'_i$ et $S'_{i+1}$ des deux capteurs voisins $C_i$ et $C_{i+1}$ pour constituer deux comptages, respectivement positif et négatif, chaque comptage étant effectué par exemple à la fin de chaque période d'intégration des charges; puis à effectuer la différence entre les comptages positif et négatif dans une deuxième étape ; et soustraire du signal $S_{i+1}$, un écart entre les composantes continues des signaux $S'_i$ et $S'_{i+1}$ établie en fonction de la différence entre les niveaux des deux comptages, par exemple en fonction du signe ou de l'intensité de cette différence.

Ce procédé d'harmonisation part de l'approche statistique suivante : l'acquisition de flux infrarouge est de même niveau médian pour deux capteurs qui décrivent deux lignes d'image, lorsque le flux est sommé sur une partie suffisante de l'excursion effectuée par ces capteurs lors de leur balayage d'image. Cette approche revient donc à ne pas prendre en compte les valeurs effectives des différences de niveau dans un même type comptage, positif ou négatif, mais à compter uniquement le nombre de ces différences de niveau, autrement dit à pondérer selon le même coefficient chacune de ces valeurs ; ce résultat se vérifie statistiquement à partir d'un nombre suffisant d'opérations de comptage, correspondant par exemple à une période de balayage.

Le circuit de compensation selon l'invention est intégré au circuit de multiplexage. Dans ce circuit, tel qu'illustré partiellement par la figure 2, les signaux $S_i$ et $S_{i+1}$ de sortie du circuit d'intégration (non représenté) sont traités par un circuit de traitement élémentaire. Ce circuit élémentaire permet d'effectuer une correction itérative du signal $S_{i+1}$ par soustraction de la différence des composantes continues des signaux $S'_i$ et $S'_{i+1}$ dans un amplificateur opérationnel $A_{i+1}$. Le circuit de traitement élémentaire comporte également des soustracteurs, des compteurs et des composants d'ajustement de la correction de la composante continue. En sortie des amplificateurs opérationnels, les signaux corrigés, respectivement $S'_i$ et $S'_{i+1}$, sont appliqués d'une part, aux registres de multiplexage (non représentés) pour fournir le signal de sortie video et d'autre part, à l'entrée d'un premier soustracteur, $\Delta_{i+1}$, pour effectuer la différence entre le $S'_{i+1}$ et le signal $S'_i$.

Montés en sortie du soustracteur $\Delta_{i+1}$, l'un ou l'autre de deux compteurs $\Sigma^+_{i+1}$ et $\Sigma^-_{i+1}$ est incrémenté suivant le signe, respectivement positif ou négatif, de la différence $S'_{i+1}-S'_i$ calculée par le soustracteur $\Delta_{i+1}$. Chaque incrémentation est effectuée, dans cet exemple de réalisation, à la fin de chaque durée d'intégration des charges du circuit d'intégration. D'autres périodes d'incrémentation peuvent être utilisées.

Les sorties des compteurs $\Sigma^+_{i+1}$ et $\Sigma^-_{i+1}$ sont reliées à l'entrée d'un second soustracteur $\Delta'_{i+1}$. Ce second soustracteur effectue la différence des valeurs comptabilisées par les compteurs $\Sigma^+_{i+1}$ et $\Sigma^-_{i+1}$. Cette opération est effectuée au bout d'un nombre suffisant d'incrémentations, par exemple égal au nombre d'intégrations réalisées au cours d'une période de balayage monodirectionnel soit, en d'autres termes, égal au nombre de pixels d'une ligne ou d'une colonne d'image (suivant le type de balayage utilisé, respectivement horizontal ou vertical).

La différence $\Delta\Sigma_{i+1}$ obtenue en sortie du second soustracteur $\Delta'_{i+1}$ traduit la valeur de l'écart entre les niveaux médians, après correction, des signaux de sortie des capteurs élémentaires $C_{i+1}$ et $C_i$. Cette valeur d'écart est obtenue au bout d'une durée correspondant au nombre d'incrémentations effectuées. Cet écart correspond à la non-uniformité existant entre ces deux capteurs. La sortie du second soustracteur $\Delta'_{i+1}$ est reliée à une entrée de gain de l'amplificateur opérationnel $A_{i+1}$, utilisé en soustracteur. En fonction de la valeur de l'écart calculée par le second soustracteur $\Delta'_{i+1}$, la correction de compensation de composante continue $O_{i+1}$, appliquée à l'entrée de l'amplificateur opérationnel $A_{i+1}$, est alors ajustée par réglage de son gain pour ramener l'écart entre les deux composantes continues des deux capteurs $C_i$ et $C_{i+1}$, à zéro. L'ajustement est effectué par exemple à l'aide d'un adaptateur de gain en tension $G_{i+1}$ couplé à un générateur de courant $K_{i+1}$ relié à l'entrée de l'amplificateur $A_{i+1}$. Ces opérations de réglage de correction se poursuivent ainsi de manière itérative jusqu'à stabilisation de la correction appliquée qui annule en permanence l'écart entre les niveaux médians des capteurs $C_{i+1}$ et $C_i$.

Le gain de correction est initialement calibré pour fournir des incréments de correction. Ces incréments peuvent être de différents types. Par exemple le niveau de gain peut être constant, et de signe correspondant au signe de la différence $\Delta\Sigma_{i+1}$ entre les niveaux médians des capteurs $C_{i+1}$ et $C_i$, ou fonction de l'intensité de cet écart, ou bien variable en fonction du temps, ou bien encore fonction d'une combinaison de ces différents types. En particulier, une correction de gain $G_i(t)$

variable au cours du temps "t" entre le moment de mise en route de la correction (correspondant à un gain initiale $G_0$) et le régime établi, une décroissance régulière du gain, du type : $G_i(t) = G_0 + \frac{k}{t}$, permet d'assurer une convergence rapide vers l'état stationnaire, sans augmenter les oscillations en régime établi.

Le signal $S_i$ est corrigé de la même manière que le signal $S_{i+1}$ par un amplificateur opérationnel $A_i$, auquel est appliqué une correction de composante continue $O_i$ en fonction de l'écart des niveaux médians entre le capteur $C_i$ et le capteur voisin $C_{i-1}$. Pour ce faire, le signal corrigé $S'_i$ en sortie de l'amplificateur $A_i$ est également appliqué à un circuit de compensation élémentaire entre les capteurs $C_i$ et $C_{i-1}$, semblable à celui décrit ci-dessus entre les capteurs $C_i$ et $C_{i+1}$ pour corriger le signal $S'_{i+1}$. Ce circuit comporte, de la même manière, des soustracteurs $\Delta_i$ et $\Delta'_i$ et des compteurs $\Sigma^+_i$ et $\Sigma^-_i$. Ainsi, de proche en proche, le même circuit de compensation élémentaire appliqué entre les signaux de sortie des capteurs $C_i$ et $C_{i+1}$ est reproduit entre tous les couples de capteurs voisins. Les capteurs $C_i$ sont ainsi corrigés de proche en proche pour des valeurs décroissantes de i.

Le détecteur converge alors vers un état de correction des écarts de non-uniformité et donc d'harmonisation de ses capteurs . Cet état est atteint lorsque tous les écarts entre $\Sigma^+_i$ et $\Sigma^-_i$, i variant de n à 0 (n étant le nombre de capteurs dans la rangée), sont annulés. Seule la correction de composante continue centrale $O_0$ reste arbitraire, et peut être prise par exemple égale à 0. Tous les signaux de sortie $S'_i$ sont alors corrigés de toutes les non-uniformités et peuvent être exploités directement, après multiplexage, pour la visualisation.

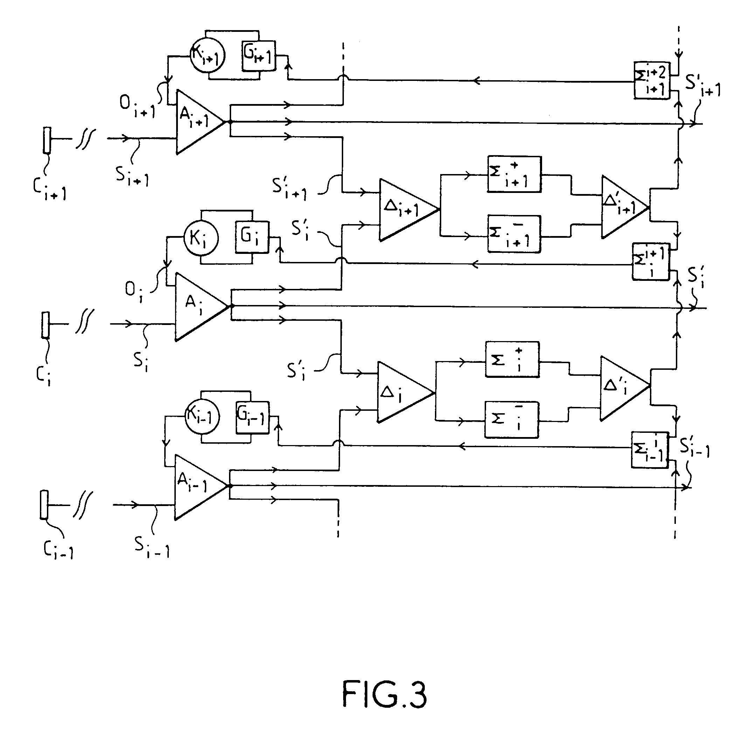

La figure 3 présente un autre exemple de réalisation de circuit de correction de détecteur mettant en oeuvre le procédé selon l'invention. Sur cette figure les mêmes signes de référence sont utilisés pour désigner des éléments identiques à ceux présentés en regard de la figure précédente. Ce circuit se distingue de celui de l'exemple précédent en ce que l'écart des niveaux médians mesuré par le second soustracteur, $\Delta'_{i+1}$ ou $\Delta'_i$, est appliqué aux deux amplificateurs de correction $A_{i+1}$ et $A_i$ ou, respectivement, $A_i$ et $A_{i-1}$ à l'aide de sommateurs $\Sigma^{i+2}_{i+1}$ et $\Sigma^{i+1}_i$, ou respectivement, $\Sigma^i_{i-1}$. Les gains sont calibrés pour que l'incrément de correction soit de niveau moitié par rapport à l'exemple de circuit précédent puisque chaque signal $S_i$ reçoit deux corrections, celle provenant de son écart de niveau avec le signal $S_{i+1}$ et celle provenant de son écart de niveau avec le signal $S_{i-1}$. La propagation de la correction s'effectue alors simultanément dans les deux sens, suivant les valeurs croissantes et décroissantes de i. Ceci permet d'obtenir une convergence vers un état de correction dont la moyenne est nulle, c'est-à-dire de conserver une image de même état d'éclairement moyen que l'image non corrigée.

L'invention n'est pas limitée aux exemples de réalisation décrits et représentés. Il est en particulier possible de simplifier le procédé en s'affranchissant de l'étape de comptage des différences positives et négatives des niveaux d'intensité des signaux élémentaires. La mesure de la différence des intensités est alors réduite à une simple prise en compte du signe de cette différence. L'opération s'effectue alors par une augmentation ou une diminution du gain de la correction d'écart de non-uniformité, suivant le signe de la différence des niveaux d'intensité. Le processus converge vers le même état stationnaire que précédemment, correspondant à une mise à niveau des médianes des différences positives et négatives, avec une convergence toutefois plus lente. Cependant, cette solution présente l'avantage de ne pas utiliser de circuits de comptage.

## Revendications

1. Procédé de compensation électronique des non-uniformités de détection des capteurs élémentaires ($C_i$) d'une barrette de détection d'image, en particulier infrarouge, associée à un système optomécanique de balayage (20) et à un groupe oculaire (30) de projection d'une image de scène sur la barrette, chacun de ces capteurs délivrant un signal élémentaire ($S_i$) présentant une composante continue et une intensité fonction d'un éclairement reçu dans un champ élémentaire donné pendant une durée prédéterminée, caractérisé en ce qu'il consiste à effectuer, à chaque intégration de signal par un premier capteur ($C_{i+1}$), une mesure de différence entre intensités de signaux ($S_{i+1}$, $S_i$), délivrés par le premier capteur ($C_{i+1}$) et par un capteur voisin ($C_i$) et corrigés lors d'une intégration de signal antérieure, à réaliser une correction de niveau sur au moins le signal ($S_{i+1}$) du premier capteur en fonction d'une mesure de la différence d'intensité des signaux ($S_{i+1}$, $S_i$), et à renouveler l'ensemble des étapes précédentes pour tous les capteurs à corriger.

2. Procédé selon la revendication 1, caractérisé en ce que la mesure de la différence d'intensités des signaux élémentaires utilisée pour la correction est effectuée par incrémentation de l'un ou l'autre de deux compteurs ($\Sigma^+_{i+1}$, $\Sigma^-_{i+1}$) positif et négaff, suivant le signe de cette différence, puis par différence entre les niveaux des deux compteurs après un nombre suffisant de comptages.

3. Circuit de compensation pour la mise en oeuvre du procédé selon la revendication 2, caractérisé en ce que la barrette étant composée d'au moins une rangée de capteurs voisins ($C_{i+1}$, $C_i$, $C_{i-1}$) balayant des lignes d'image différentes et délivrant des signaux élémentaires ($S_{i+1}$, $S_i$, $S_{i-1}$) au cours du balayage, le circuit de compensation se compose de circuits de traitement élémentaires, chaque signal de sortie ($S_{i+1}$) de chaque capteur à corriger ($C_{i+1}$) est traité après intégration des charges délivrées par ce capteur ($C_{i+1}$) pendant une durée prédéterminée, chaque circuit de traitement élémentaire comportant un amplificateur opérationnel de correction ($A_{i+1}$, $A_i$) qui délivre un signal corrigé ($S_{i+1}$, $S_i$), les signaux élémentaires corrigés sont appliqués, d'une part à un circuit de multiplexage pour fournir le signal de visualisation (S), et d'autre part à l'entrée d'un premier soustracteur ($\Delta_{i+1}$) qui incrémente en sortie des compteurs ($\Sigma_{i+1}^+$, $\Sigma_{i+1}^-$) des différences respectivement positive et négative des intensités des signaux élémentaires ($S_{i+1}$, $S_i$), les sorties des compteurs ($\Sigma_{i+1}^+$, $\Sigma_{i+1}^-$) sont reliées à l'entrée d'un second soustracteur ($\Delta'_{i+1}$) qui soustrait les valeurs incrémentées par les deux compteurs (($\Sigma_{i+1}^+$, $\Sigma_{i+1}^-$)) au bout d'un nombre suffisant d'incrémentations, pour appliquer en sortie une valeur d'écart ($\Delta\Sigma_{i+1}$) entre niveaux médians de signaux ($S_{i+1}$, $S_i$) à l'entrée d'un adaptateur de gain ($G_{i+1}$, $K_{i+1}$) relié à l'amplificateur opérationnel de correction ($A_{i+1}$), l'adaptateur étant réglé pour appliquer un signal de correction de composante continue ($O_{i+1}$), compensant l'écart des niveaux médians ($\Delta\Sigma_{i+1}$).

4. Circuit de compensation selon la revendication 3, caractérisé en ce que l'adaptateur de gain comporte un adaptateur de tension ($G_{i+1}$) couplé à un générateur de courant ($K_{i+1}$) pour le régler en tension.

5. Circuit selon la revendication 3, caractérisé en ce que chaque incrémentation de l'un ou l'autre des compteurs ($\Sigma_{i+1}^+$, $\Sigma_{i+1}^-$) est effectué à la fin de chaque durée d'incrémentation de charges délivrées par chaque capteur à corriger et en ce que le second soustracteur ($\Delta'_{i+1}$) délivre une valeur d'écart de niveaux médians ($\Delta\Sigma_{i+1}$) entre deux capteurs voisins ($C_{i+1}$, $C_i$) au bout d'un nombre d'incrémentations égal au nombre d'intégrations de charges réalisées au cours d'une période de balayage.

6. Circuit selon l'une des revendications 3 à 5, caractérisé en ce que le gain de correction est constant au cours du temps de signe correspondant au signe de l'écart de niveaux médians ($\Delta\Sigma_{i+1}$).

7. Circuit selon l'une des revendications 3 à 5, caractérisé en ce que le gain de correction est fonction de la valeur de l'écart de niveaux médians ($\Delta\Sigma_{i+1}$).

8. Circuit selon la revendication 5, caractérisé en ce que le gain de correction ($G_i$) suit au cours du temps t une loi du type :

$$G_i(t) = G_0 + \frac{k}{t}$$

($G_0$ tant le gain initial au temps t=0, k étant une constante adaptée)

9. Circuit de compensation selon l'une des revendications 3 à 8, caractérisé en ce que l'écart des niveaux mesuré par le second soustracteur ($\Delta'_{i+1}$) est également appliqué à l'entrée de l'amplificateur opérationnel de correction ($A_i$) du capteur voisin ($C_i$), le gain de correction de chaque signal élémentaire ($S_i$) délivré par chaque capteur à corriger ($C_i$) étant adapté pour permettre une double correction provenant de son écart de niveaux médians avec les signaux élémentaires ($S_{i+1}$, $S_{i-1}$) délivrés pour les capteurs voisins ($C_{i+1}$, $C_{i-1}$) du capteur à corriger ($C_i$).

10. Procédé de compensation électronique selon la revendication 1, caractérisé en ce que la correction de niveau sur au moins le signal ($S_{i+1}$) du premier capteur ($C_{i+1}$) est réalisée directement en fonction de la différence d'intensité des signaux élémentaires ($S_{i+1}$, $S_i$), sans passer par la mesure de la différence entre les comptages des différences positives et négatives entre les intensités des signaux élémentaires ($S_{i+1}$, $S_i$) au cours du balayage.

11. Circuit de compensation de mise en oeuvre du procédé selon la revendication 9, caractérisé en ce qu'il est conforme à un circuit selon l'une des revendications 3 à 9 dans lequel la correction de composante continue ($O_{i+1}$) à appliquer à l'entrée de l'amplificateur ($A_{i+1}$) par l'intermédiaire de l'adaptateur de gain ($G_{i+1}$, $K_{i+1}$) est fonction de la différence obtenue en sortie du premier soustracteur ($\Delta_{i+1}$).

FIG.1

FIG.2

FIG.3

**Office européen des brevets**

# RAPPORT DE RECHERCHE EUROPEENNE

Numero de la demande

EP 95 40 2792

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | FR-A-2 686 471 (THOMSON TUBES ELECTRONIQUE) <br> * page 14, ligne 10 - page 6, ligne 25 * | 1 | H04N5/217 <br> H04N5/33 |
| A | --- | 2-7 | |
| X | US-A-4 214 271 (JONES ET AL.) <br> * colonne 3, ligne 63 - colonne 4, ligne 42 * | 1 | |
| D,A | EP-A-0 419 342 (THOMSON CSF) <br> * colonne 4, ligne 47 - colonne 6, ligne 39 * <br> * colonne 2, ligne 6 - ligne 26 * <br> ----- | 1 | |

**DOMAINES TECHNIQUES RECHERCHES (Int.Cl.6)**

H04N

Le présent rapport a été établi pour toutes les revendications

| Lieu de la recherche | Date d'achèvement de la recherche | Examinateur |
|---|---|---|
| LA HAYE | 9 Avril 1996 | Bequet, T |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)